# EUROPEAN PATENT APPLICATION

(11) **EP 2 887 249 A1**
(43) Date of publication of application: **24.06.2015**
(21) Application number: 13306818.9
(22) Date of filing: 20.12.2013
(51) Int. Cl.: G06F 21/32, G06K 9/00

(54) **A biometric data pre-check process to optimize personalization time**

(71) Applicant: Gemalto SA, 92190 Meudon (FR)
(72) Inventor: Boutet, Olivier, 92190 Meudon (FR); Duboucher, Thomas, 92190 Meudon (FR); Vibert, Laurent, 92190 Meudon (FR)
(74) Representative: Cour, Pierre

(57) **Abstract**

The present disclosure relates to a method (100) for the realization of a biometric document, said method comprising the following steps:
- acquiring biometric data from a human user (U), said biometric data being intended to be used by a biometric algorithm (bAI) of said biometric document;
- generating a template (Tmp) of the initial biometric data;
- determining if the template (Tmp) is compatible with said biometric algorithm (bAl) by processing the template (Tmp) with a first part of said biometric algorithm (bAI), said first part of the biometric algorithm either generating a verified template (vTmp) if the template is compatible, or rejecting the template if the template is incompatible.

## Description

### TECHNICAL FIELD

The present invention relates to biometrics and to realization processes of biometric documents. The invention relates in particular to a biometric data process to speed-up personalization time and limit personalization defect.

### BACKGROUND OF THE INVENTION

Biometrics refers to the identification of human beings based on their unique biological characteristics, and has established itself as the most pertinent technology for identifying individuals in a fast and reliable way. Examples of biological characteristics include among others: fingerprints, face, iris, retina and hand geometry. An application of biometrics that has been widely deployed to date is the electronic passport. Authentication methods based on biometrics typically require a user to submit his biological characteristics to a biometric system. As a result, the individual is either accepted as a valid user, or rejected. Realization of such biometric documents typically involves the following steps:
- acquisition of initial biometric data from a human user, using a sensor, for example an image acquisition system;
- extraction of biological characteristics from the initially acquired biometric data. The result of this extraction can be a vector of numbers, or an image with particular properties;
- generation of a template, which is a synthesis of the relevant characteristics extracted from the initially acquired biometric data;
- enrolment of the template: the template is stored, for example in a computer file;
- personalization of a biometric document: during this step, the biometric document is fabricated and the template is stored on it, for example on a chip of the biometric document. The template is stored in a raw, unprocessed format ;
- initialization of the biometric document, said initialization comprising a transformation of the template, from the unprocessed format to a processed format, resulting in a transformed template. This step occurs on the biometric document and typically requires several hundreds of milliseconds.

According to this realization process, the biometric document is then delivered to the human user. A disadvantage of this first realization process is its relative slowness, due to the time-consuming step of initialization. An alternative realization process therefore proposes to directly deliver the biometric document to the human user after the personalization step, the initialization step being performed later, during the first use of the biometric document by the human user. An acceleration of the realization process is thus allowed.

However, there is a risk with both methods - the "slow" one and the "quick" one - that the generated template is finally rejected during the initialization step, for example because it comprises an incorrect quantity of characteristics, or because said characteristics present inadequate geometric properties. In the case of a fingerprint, the extracted characteristics are typically minutiae, that is to say, elements which differentiate one fingerprint from another and which impart individuality to each fingerprint. If the template is rejected:
- with the "slow" method, time has been lost proceeding an unsuccessful initialization step, and one has to come back to the user either to make a new capture or to find an alternative authentication method;
- with the "quick" method, a defective biometric document has been delivered to the human user.

None of these cases are acceptable for mass production.

### SUMMARY OF THE INVENTION

The present invention addresses concerns of the prior art. An objective of the invention is therefore to provide an efficient and quick realization process of biometric document that eliminates the risk of delivering a defective biometric document to a human user.

To this end, in an embodiment of the present invention, there is provided a method for the realization of a biometric document, said method comprising the following steps:
- acquiring initial biometric data from a human user, said initial biometric data being intended to be used by a biometric algorithm of said biometric document;
- generating a template of the initial biometric data;
- determining if the template is compatible with said biometric algorithm by processing the template with a first part of said biometric algorithm, said first part of the biometric algorithm either generating a verified template if the template is compatible, or rejecting the template if the template is incompatible.

Thanks to the invention, the template is processed with a first part of the biometric algorithm that will be used in the future biometric document. If the template is incompatible with said biometric algorithm, the template is rejected. It should be noted that the eventual rejection of the template occurs before proceeding to an initialization step of the template. In this way, the case of an incompatible template rejected only after an unsuccessful initialization step is eliminated. The verified template generated after processing the template with the first part of the biometric algorithm is indeed guaranteed to be accepted by the biometric algorithm in future steps, and in particular in an initialization step. The biometric algorithm comprises beneficially a first function that allows testing the compatibility of the generated template of the initial biometric data with said biometric algorithm, and a second function that allows authenticating a human user owing the biometric document. Said first function is realized by said first part of said biometric algorithm.

The method according to an embodiment of the invention may also have one or more of the characteristics below, considered individually, or in all technically possible combinations:
- Processing the template with the first part of the biometric algorithm may be realized using a secure element that contains said biometric algorithm.
- The method may comprise a step of signing the generated verified template.
- The method may comprise a step of encrypting the generated verified template.
- The method may comprise both a step of signing and a step of encrypting the generated verified template.
- Said initial biometric data may comprise fingerprints; said template of the initial biometric data may comprise a spatial map of a set of minutiae of the fingerprints and said first part of the biometric algorithm may check geometric characteristics of the set of minutiae of the fingerprints.
- Geometric characteristics of the set of minutiae of the fingerprints that are checked by the first part of the biometric algorithm may be chosen among the following list:
   o inter-minutiae distances;
   o angles between remarkable lines of the set of minutiae;
   o a spatial distribution of the set of minutiae.
- The method may comprise, before determining if the template is compatible with the biometric algorithm, a step of checking quantitative characteristics of the template.
- Quantitative characteristics of the template may be chosen among the following list:
   o minimum quantity of minutiae of the set of minutiae of the fingerprints;
   o maximum quantity of minutiae of the set of minutiae of the fingerprints.
- According to a first embodiment, the method may comprise the following steps:
   o enrolling the verified template;
   o personalizing the biometric document by storing the verified template, that has been previously enrolled, on a chip of the biometric document;
   o delivering the personalized biometric document to the human user;
   o initializing the biometric document by transforming the verified template from an unprocessed format to a processed format.
- According to a second embodiment, the method may comprise the following steps:
   o enrolling the verified template;
   o personalizing the biometric document by storing the verified template, that has been previously enrolled, on a chip of the biometric document;
   o initializing the biometric document by transforming the verified template from an unprocessed format to a processed format;
   o delivering the personalized and initialized biometric document to the human user.
- Said biometric algorithm of the biometric document beneficially ensures, for the authentication of the human user, a comparison between:
   o second biometric data of the human user, second biometric data being acquired after said initial biometric data;
   o and said verified template of the initial biometric data.

Other features and benefits of the invention will become apparent on examining the detailed specifications hereafter and the appended drawings.

### BRIEF DESCRIPTION OF THE FIGURES

- Figure 1 schematically illustrates a diagram of the steps of a method according to a first embodiment of the invention.
- Figure 2a schematically illustrates a first realization of the method according to the first embodiment of figure 1.
- Figure 2b schematically illustrates a second realization of the method according to the first embodiment of figure 1.

### DETAILED DESCRIPTION OF THE PREFERRED EMBODIMENT

Some embodiments of apparatus and methods in accordance with embodiments of the present invention are now described, by way of example only, and with reference to the accompanying drawings. The description is to be regarded as illustrative in nature and not as restricted.

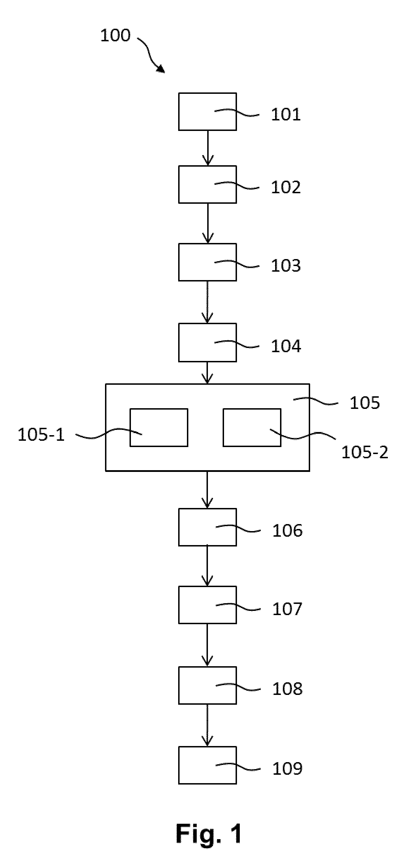

Figure 1 schematically illustrates a diagram of the steps of a method 100 for the realization of a biometric document, according to a first embodiment of the invention.

According to a first step 101, initial biometric data are acquired from a human user.

According to a second step 102, a template of the initial biometric data is generated.

According to a facultative third step 103, quantitative characteristics of the generated template are tested. The facultative third step 103, irrespective of the biometric algorithm, can improve the compatibility ratio of the template with the biometric algorithm. However, there is no guarantee that a template, the characteristics of which have been quantitatively tested during the third step 103, is compatible with the biometric algorithm. Quantitative characteristics of the template that can be tested during the third step 103 are for example:
- a minimum quantity of characteristics of the initial biometric data previously acquired;
- a maximum quantity of characteristics of the initial biometric data previously acquired.

If the quantity of characteristics is lower than the minimum, a new acquisition of the initial biometric data can be required. If the quantity of characteristics is upper than the maximum, a filtering of the characteristics can be carried out in order to finally obtain a quantity of characteristics comprised between the minimum and the maximum.

According to a fourth step 104, one determines if the template is compatible with a biometric algorithm that will be used in a future biometric document, by processing the template with a first part of said biometric algorithm, said first part of the biometric algorithm either generating a verified template if the template is compatible, or rejecting the template if the template is incompatible. The method 100 according to the first embodiment of the invention then comprises a fifth step 105, having a first sub-step 105-1 of signing the verified template and/or a second sub-step 105-2 of encrypting the verified template. The first sub-step 105-1 of signature and the second sub-step 105-2 of encryption of the fifth step 105 are independent: one can implement either or both sub-steps 105-1 and 105-2. If both sub-steps of signature 105-1 and encryption 105-2 are implemented, it is to be noted that one can proceed first to the sub-step of signature 105-1 and then to the sub-step of encryption 105-2, or first to the sub-step of encryption 105-2 and then to the sub-step of signature 105-1.

According to a sixth step 106, the verified template is enrolled. Steps 101 to 106 that have just been described can typically be realized in a city hall.

According to a seventh step 107, the biometric document is personalized by storing the verified template on a chip of the biometric document. The seventh step can typically be realized by a national printer.

According to an eighth step 108, the personalized biometric document is delivered to the human user.

According to a ninth step 109, the biometric document is initialized by transforming the verified template from an unprocessed format to a processed format.

The first embodiment of the invention can be referred to as a "quick method" for the realization of a biometric document, because initialization of the biometric document and transformation of the verified template take place once the biometric document has been delivered to its human user, at the very first use of the biometric document by its human user, for example during an identity control in an airport. Said initialization of the biometric document and transformation of the verified template are indeed typically very time-consuming - several hundreds of milliseconds - as compared with the other steps of the process, from an industrial point of view. However, duration of several hundreds of milliseconds, furthermore only occurring at the first use, is unnoticeable from a user point of view.

According to a second embodiment of the invention, the ninth step 109 of initialization of the biometric document and transformation of the verified template can take place right after the seventh step 107 of personalization of the biometric document, and just before the eighth step 108 of delivery of the biometric document. The second embodiment of the invention can thus be referred to as a "slow method", as compared to the "quick method" of the first embodiment.

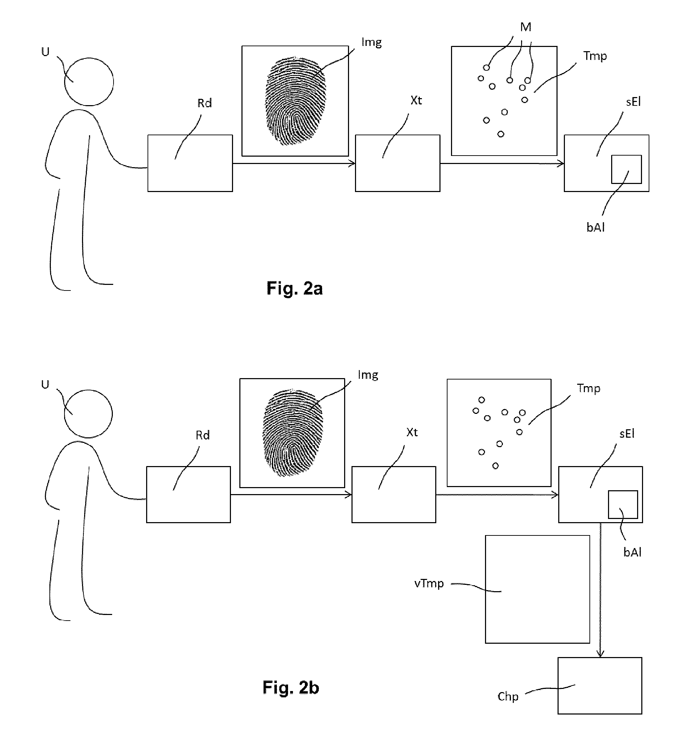

A first operating mode of the method 100 is illustrated in figure 2a. The first operating mode corresponds to the case of an incompatible template, which is rejected during the fourth step 104.

Figure 2a shows a human user U, using a sensor Rd to proceed to the acquisition of initial biometric data, corresponding to the first step 101 of the method 100. In the particular example shown in figure 2a, initial biometric data are fingerprints of the human user U. However, other biometric data, such as face, iris, retina, hand or vein pattern, could also be used. The sensor Rd can for example be an image acquisition system. The sensor Rd generates an image Img of the acquired fingerprint. The image Img is then transmitted to an extractor Xt, which extracts the characteristics of the acquired fingerprint. Said characteristics typically are minutiae, that is to say elements which differentiate one fingerprint from another and which impart individuality to each fingerprint. Minutiae comprise for example ridge ending, ridge bifurcation, short or independent ridge, etc. The extractor Xt then generates a template Tmp of the acquired fingerprint, which corresponds to the second step 102 of the method 100. The template Tmp comprises a set of minutiae M. The template Tmp is then transmitted to a secure element sEl, which comprises a biometric algorithm bAl. Said biometric algorithm bAl used at this early stage of the method 100 is precisely the biometric algorithm that will be used in the future biometric document, for authentication and/or identification of the human user U. The template Tmp is processed with a first part of said biometric algorithm bAl, which corresponds to the fourth step 104 of the method 100. Processing the template Tmp with said first part of the biometric algorithm bAl allows to determine if the template Tmp is compatible with said biometric algorithm bAl. In the first operating mode of the method 100, the template Tmp is incompatible with the biometric algorithm, which leads to the rejection of the template Tmp. A typical example where the template Tmp is rejected by the biometric algorithm bAl considered in this particular embodiment of the invention, is the case of aligned minutiae M. It should be noted that even if the third step 103 is implemented, and if quantitative characteristics of the set of minutiae M are successfully tested, the template Tmp will be rejected in said particular case of aligned minutiae M. Compared to the facultative third step 103, where quantitative characteristics of the template Tmp can be tested, the fourth step 104 typically checks geometric characteristics of the template Tmp. Said geometric characteristics can for example be chosen among the following list:
- inter-minutiae distances;
- angles between remarkable lines of the set of minutiae;
- spatial distribution of the set of minutiae.

A second operating mode of the method 100 is illustrated in figure 2b. The second operating mode corresponds to the case of a compatible template. As previously described in relation to figure 2a, the human user U proceeds to the acquisition of initial biometric data - here, a fingerprint - using the sensor Rd. The sensor Rd generates an image Img of the acquired fingerprint. The image Img is transmitted to the extractor Xt, which extracts the characteristics of the acquired fingerprint and generates a template Tmp of the acquired fingerprint. The template Tmp is then transmitted to a secure element sEl, which contains the biometric algorithm bAl that will be used in the future biometric document. The template Tmp is processed with a first part of said biometric algorithm bAl, which corresponds to the fourth step 104 of the method 100. In the second operating mode of the method 100, the template Tmp is compatible with the biometric algorithm bAl and the processing of the template Tmp with the first part of the biometric algorithm bAl results in the generation of a verified template vTmp. The verified template vTmp is guaranteed to be accepted by the biometric algorithm bAl for any future operation, and in particular during a transformation step. The verified template vTmp is then stored on a chip Chp of a biometric document, during a personalization step that has previously been mentioned in relation to figure 1.

## Claims

1. Method (100) for the realization of a biometric document, said method comprising the following steps:
- acquiring initial biometric data from a human user (U), said initial biometric data being intended to be used by a biometric algorithm (bAl) of said biometric document;
- generating a template (Tmp) of the initial biometric data;
- determining if the template (Tmp) is compatible with said biometric algorithm (bAl) by processing the template (Tmp) with a first part of said biometric algorithm (bAl), said first part of the biometric algorithm either generating a verified template (vTmp) if the template is compatible, or rejecting the template if the template is incompatible.

2. Method (100) according to claim 1 wherein processing the template (Tmp) with the first part of the biometric algorithm (bAl) is realized using a secure element (sEl) that contains said biometric algorithm.

3. Method (100) according to claim 1 comprising a step (105-1) of signing the generated verified template (vTmp).

4. Method (100) according to claim 1 comprising a step (105-2) of encrypting the generated verified template (vTmp).

5. Method (100) according to claim 1 wherein:
- said initial biometric data comprise fingerprints;
- said template (Tmp) of the initial biometric data comprises a spatial map of a set of minutiae (M) of the fingerprints;
- said first part of the biometric algorithm (bAl) checks geometric characteristics of the set of minutiae (M) of the fingerprints.

6. Method (100) according to claim 1 comprising the following steps:
- enrolling the verified template (vTmp);
- personalizing the biometric document by storing the verified template (vTmp), that has been previously enrolled, on a chip (Chp) of the biometric document;
- delivering the personalized biometric document to the human user (U);
- initializing the biometric document by transforming the verified template (vTmp) from an unprocessed format to a processed format.

7. Method (100) according to claim 1 comprising the following steps:
- enrolling the verified template (vTmp);
- personalizing the biometric document by storing the verified template (vTmp), that has been previously enrolled, on a chip (Chp) of the biometric document;
- initializing the biometric document by transforming the verified template (vTmp) from an unprocessed format to a processed format;
- delivering the personalized and initialized biometric document to the human user (U).

8. Method (100) according to claim 1 wherein said biometric algorithm of the biometric document ensures, for the authentication of the human user, a comparison between:
- second biometric data of the human user, second biometric data being acquired after said initial biometric data;
- and said verified template (vTmp) of the initial biometric data.
